# FASCICULE DE BREVET EUROPEEN

(11) **EP 0 631 800 B1**
(45) Date de publication et mention de la délivrance du brevet: **16.04.1997**
(21) Numéro de dépôt: 94401359.8
(22) Date de dépôt: 16.06.1994
(51) Int. Cl.: B01D 17/00, B01D 21/00

(54) **Dispositif de traitement des eaux résiduaires notamment des eaux de pluie**
Vorrichtung zur Aufbereitung von Abwasser, insbesondere von Regenwasser
Wastewater treatment device, specially for rainwater

(30) Priorité: 30.06.1993 FR 9308007
(43) Date de publication de la demande: 04.01.1995
(73) Titulaire: DEGREMONT, F-92508 Rueil-Malmaison Cédex (FR)
(72) Inventeur: Vion, Patrick, F-78800 Houilles (FR); Labaquere, Hervé, F-01330 Amberieux en Dombes (FR)
(74) Mandataire: Armengaud Ainé, Alain

(56) Documents cités:
- AU-B- 3 645 978
- DE-A- 2 030 617
- FR-A- 1 098 155

## Description

La présente invention est relative à un dispositif pour le traitement des eaux et elle concerne plus particulièrement un dispositif perfectionné permettant d'effectuer à la fois le dessablage, le dégraissage et la décantation des eaux résiduaires ou des eaux de pluie.

La présente titulaire a décrit et revendiqué dans FR-A-2679223 un procédé et un appareil pour le traitement des eaux permettant également dans un seul dispositif d'effectuer simultanément, notamment, le dessablage, le dégraissage, la coagulation, la floculation et la décantation d'eaux usées.

La présente invention se propose d'apporter des perfectionnements à ce type de dispositif. Notamment, en vue de son adaptation à un mode de fonctionnement intermittent, en particulier pour le traitement des eaux de pluie.

L'un des buts de l'invention consiste à mettre en oeuvre des technologies favorisant le traitement même lors du remplissage du dispositif, réalisant une évacuation sélective des flottants, des boues et de la tranche d'eaux clarifiées, et permettant de réaliser un nettoyage hydraulique du dispositif.

On sait que la mauvaise qualité de l'effluent admis dans une installation de traitement d'eaux usées, pendant la phase de démarrage de cette installation, prend une importance considérable lorsqu'il s'agit de traitement épisodique ou de courte durée d'effluents spécifiques, notamment des eaux de pluie car cette phase de démarrage peut représenter de 10 à 50% de l'épisode pluvieux. La présente invention se propose en premier objectif de minimiser l'effet négatif de la mise en régime d'une installation de traitement d'eaux du type mentionné ci-dessus.

Par ailleurs, on sait que le rendement global d'une telle installation de traitement des eaux à fonctionnement intermittent et de courte durée est grandement conditionné par la façon selon laquelle on évacue sélectivement les flottants, les sables, les boues et la tranche d'eau clarifiée éliminée qui équivaut en volume à 5 à 40% du volume total clarifié. Le deuxième objectif de la présente invention consiste donc à réaliser de la façon la plus simple possible et la plus efficace le captage et l'évacuation des différents composants mentionnés ci-dessus.

Enfin, le dispositif du type auquel se réfère l'invention fonctionne peu de temps et il est donc inutile de mettre en oeuvre un système d'évacuation continue des sables, graisses et boues. Cependant, étant donné que le dispositif demeure inactif durant plusieurs jours ou même durant plusieurs semaines, il est nécessaire de prévoir des moyens de nettoyage du radier de l'ouvrage du dispositif, afin d'éviter une fermentation ou un séchage des boues au fond de l'ouvrage, qui serait susceptible d'entraîner une pollution de l'eau lors de la phase de redémarrage du dispositif. C'est là un autre objectif de la présente invention.

En conséquence, la présente invention est relative à un dispositif qui comporte les caractéristiques telles que définies dans la revendication 1, ou les caractéristiques préférées et additionnelles des revendications 2 à 10.

La présente invention concerne également l'application des dits dispositifs au traitement des eaux de pluie.

Selon l'invention, ledit clapet est de préférence un clapet lesté restant fermé en l'absence de charge hydraulique en amont de la cloison sur laquelle il est monté.

Selon une autre caractéristique de la présente invention, on prévoit, dans le décanteur, un double système d'extraction pour assurer une évacuation séparée de la tranche d'eau clarifiée d'une part et, des boues et des flottants d'autre part, ce double système d'extraction comportant :
- des moyens prévus légèrement au-dessus du point haut du radier du décanteur, pour évacuer l'eau clarifiée sans évacuer la boue et les flottants, ces moyens pouvant être réalisés sous la forme d'une pompe ou d'un tube d'évacuation gravitaire et,
- des moyens pour évacuer les boues puis les flottants dans le décanteur, ces moyens positionnés au fond du décanteur et réalisés de préférence sous la forme d'une pompe apte à être mise en action après l'évacuation de la tranche d'eau clarifiée supérieure par lesdits premiers moyens.

Selon encore une autre caractéristique de la présente invention, le dispositif comporte des enceintes de stockage d'eau clarifiée destinée à assurer le nettoyage du radier du décanteur.

Selon l'invention, le dispositif comprend également un système d'évacuation des sables, à la partie inférieure de l'enceinte du dessableur, ce système utilisant les moyens prévus pour l'évacuation des boues, notamment une pompe de transfert dont le refoulement est pourvu de deux vannes : l'une permettant l'évacuation vers l'égout lors de la vidange du décanteur,
l'autre assurant le transfert vers une fosse ou similaire.
Selon l'invention, le radier du décanteur est compartimenté par un certain nombre de cloisons délimitant ainsi des portions de radier à chacune desquelles est affecté une enceinte de stockage d'eau ainsi qu'une vanne permettant d'assurer par circulation d'eau, le nettoyage de cette portion de radier à partir de l'eau contenue dans ladite enceinte.

D'autres caractéristiques et avantages de la présente invention ressortiront de la description faite ci-après en référence aux dessins annexés qui en illustrent un mode de réalisation donné à titre d'exemple, dépourvu de tout caractère limitatif.

Sur les dessins :
- la figure 1 est une vue schématique en perpective représentant un dispositif conforme à la présente invention
- la figure 2 est une coupe axiale en coupe verticale du dispositif illustré par la figure 1 et ;
- la figure 3 est une coupe selon 3-3 de la figure 2.

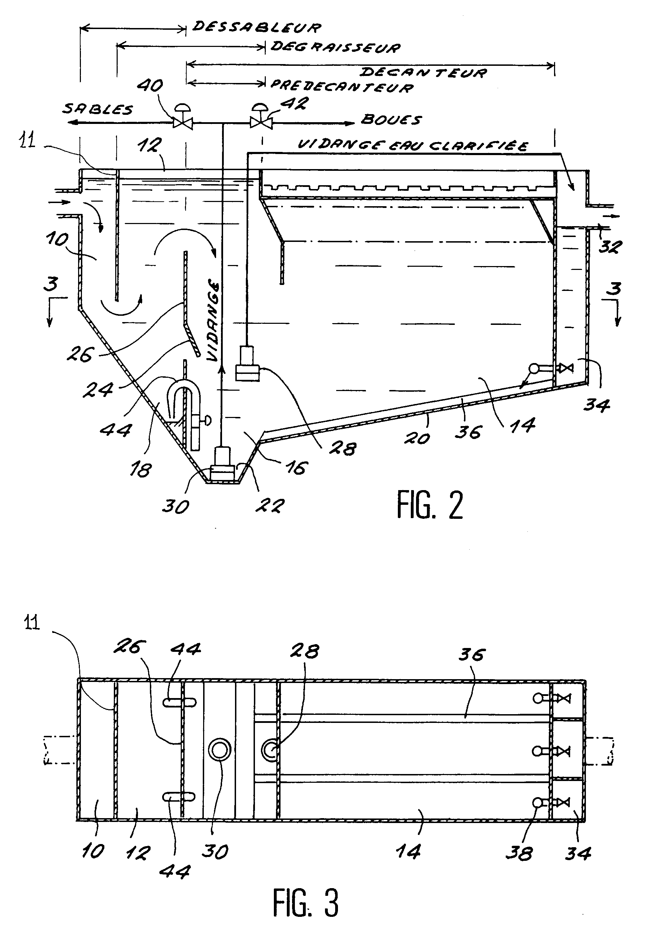

Ainsi qu'on la précisé dans le préambule de la présente description, le dispositif objet de la présente invention constitue un perfectionnement de celui décrit dans FR-A-2679223, auquel on pourra se référer. Ce dispositif comporte donc comme précisé en partie supérieure de la figure 2, un dessableur 10, une zone (ou surface) de dégraissage 12, et un décanteur 14, représenté ici sous la forme d'un décanteur lamellaire 37, ce décanteur 14 étant précédé d'un prédécanteur 16.

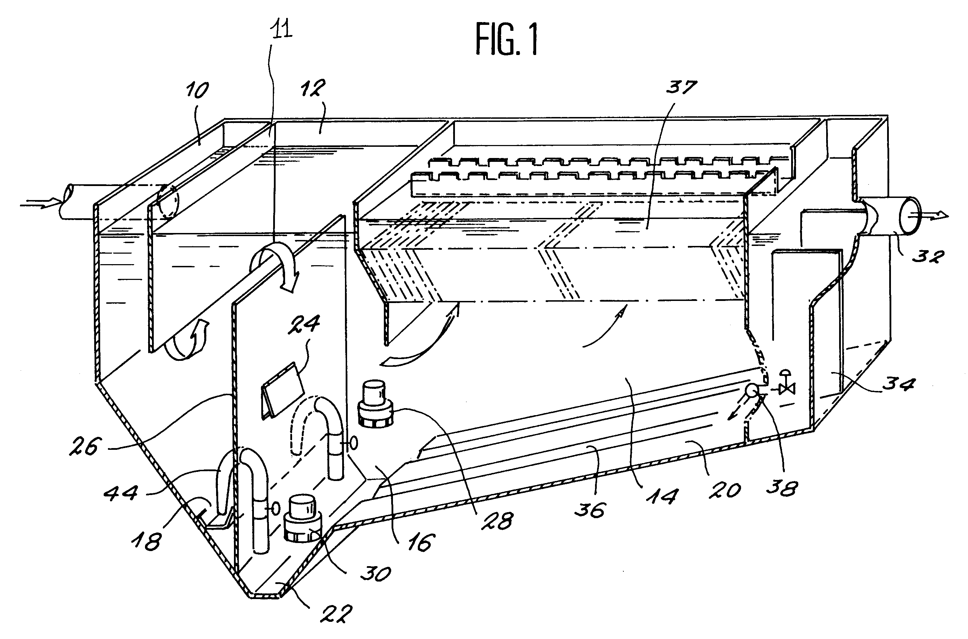

Le dessableur 10 avec sa fosse à sable 18 et sa cloison 11 est traversé par un flux descendant puis ascendant des eaux à traiter comme illustré sur les figures 1 et 2. La zone (ou surface) de dégraissage 12 est située au-dessus d'une partie du dessableur et de la zone d'alimentation du décanteur 14 (au-dessus du prédécanteur 16). Le décanteur 14 comporte un radier 20 et une fosse d'extraction des boues 22.

Selon l'invention, on prévoit un clapet tel que 24, par exemple du type à battant lesté, sur la cloison 26 qui sépare le dessableur 10 du décanteur 14. Ce clapet a un double rôle :
- il autorise la décantation durant la phase de remplissage de l'ouvrage de l'installation : en effet, en l'absence d'un tel clapet dans les installations classiques, après remplissage du dessableur, il se produit une chute de plusieurs mètres de l'eau brute dansle décanteur, ce qui engendre des turbulences empêchant ainsi la décantation. Grâce à la présence du clapet 24, le transfert de l'eau brute vers le décanteur, après le remplissage de l'enceinte du dessableur s'effectue sans perturbation ni turbulence importantes. Cette disposition permet donc d'obtenir une bonne clarification des premières tranches d'eaux admises dans le dispositif ;
- il permet, lors de la vidange du décanteur, de récupérer la tranche d'eau supérieure du dessableur, exempte de sable et clarifiée.

Dans l'exemple de réalisation représenté sur le dessin, ce clapet 24 est réalisé sous la forme d'un clapet lesté qui reste en position fermée en l'absence de charge hydraulique en amont de la cloison 26.

Selon la présente invention, on prévoit deux systèmes d'extraction conçus de façon à assurer une évacuation séparée de la tranche d'eau clarifiée d'une part, et des boues et des flottants d'autre part. Dans l'exemple de réalisation illustré sur les dessins, ce double système d'évacuation comprend :
- 1°) une pompe 28 (ou un tube) placée légèrement au-dessus du point haut du radier 20 du décanteur, pour évacuer l'eau sans évacuer la boue. Le fonctionnement de cette pompe est interrompu lorsque le niveau du plan d'eau dans le décanteur atteint un point situé légèrement au-dessus (quelques dizaines de centimètres) du niveau d'aspiration de la pompe 28, afin de ne pas entraîner les flottants ;
- une deuxième pompe 30 située au fond du décanteur dans la fosse 22 de ce dernier, cette deuxième pompe étant mise en route après l'arrêt du fonctionnement de la première pompe 28, dans les conditions indiquées ci-dessus, de manière à extraire les boues de la fosse 22, puis les flottants. Les boues et les graisses ainsi extraites sont généralement évacuées vers l'égout, et donc traitées par la station d'épuration après la période de forte charge due à l'épisode pluvieux.

A l'extrémité, côté évacuation orifice d'évacuation 32 des eaux traitées, on prévoit des enceintes de stockage de l'eau clarifiée. Sur la figure 1, le dispositif comporte trois fosses de stockage telles que 34 délimitées par des parois et alimentées en eau clarifiée provenant du décanteur lamellaire 37. Ces enceintes de stockages sont prévues par l'invention pour assurer le nettoyage du radier 20 du décanteur lorsque celui-ci n'est plus utilisé et elles restent pleines pendant la vidange du dispositif. Le radier comporte une pluralité de cloisons de séparation telles que 36 permettant de délimiter des portions de radier, chacune de ces portions devant être nettoyées par la circulation de l'eau provenant d'au moins une enceinte de stockage correspondante 34. Dans ce but, chaque enceinte 34 comporte une vanne avec diffuseur telle que 38 qui lors de son ouverture libère tout ou partie de la réserve d'eau contenue dans l'enceinte de stockage considérée. Cette eau balaye alors la portion de radier correspondante en en assurant ainsi le nettoyage.

Bien entendu, le nettoyage s'effectue portion de radier par portion de radier, par ouverture à tour de rôle des différentes vannes 38. Ce nettoyage peut être optimisé en prévoyant plusieurs chasses partielles par portion de radier, la vidange par pompage étant effectuée entre chaque opération de nettoyage.

Le dispositif selon l'invention se caractérise en outre, ainsi qu'on l'a vu ci-dessus, par un système original d'évacuation des sables.

On sait qu'il est important que le sable recueilli lors de la phase de dessablage ne soit pas évacué en même temps que les boues et les flottants, car il est susceptible de boucher les conduits de transfert et les égoûts. C'est la raison pour laquelle le sable, après la vidange du décanteur reste piégé dans la fosse à sable 18 prévue dans le dessableur. On a vu ci-dessus que dans l'invention, la tranche d'eau clarifiée contenue à la partie supérieure du dessableur (et qui représente environ 90% du volume du dessableur) a été évacuée par l'intermédiaire du clapet 24 lors de la vidange du décanteur 14.

Pour éviter des frais supplémentaires de fabrication et d'entretien, l'évacuation du sable dans le dispositif selon l'invention s'effectue par l'intermédiaire de la pompe de transfert des boues et des flottants 30.

A cet effet, le refoulement de cette pompe est équipé de deux vannes 40 et 42, l'une permettant l'évacuation vers l'égout lors de la vidange du décanteur, l'autre assurant le transfert vers une fosse ou tout moyen d'évacuation approprié. Pour permettre d'utiliser ainsi la pompe 30, il est nécessaire de transférer le sable de la fosse 18 du dessableur dans la fosse 22 du décanteur. Cette opération est réalisée selon l'invention à l'aide de tubes siphons tels que 44, l'opération étant rendue possible par le fait que la fosse 18 du dessableur est située au-dessus de la fosse 22 du décanteur.

L'opération est faite en trois phases :
a) On insuffle de l'air à contre-sens dans le tube siphon pour détasser le sable. Selon l'invention, cette insufflation d'air peut se faire par exemple par fermeture de la vanne de siphon, à l'aide d'une arrivée d'air située au-dessus de ladite vanne.
b) On ouvre la vanne du tube siphon de manière à assurer le transfert du sable vers la fosse 22 du décanteur, fosse qui à un niveau inférieur et ;
c) On met en route la pompe 30 pour assurer l'évacuation du sable.

Bien entendu, le dispositif peut en outre comporter des automatismes, notamment des capteurs de niveau qui gèrent les démarrages et les arrêts des pompes 28 et 30 ainsi que l'ouverture et la fermeture des vannes de nettoyage du radier 20, d'isolement des tubes siphons 44 d'injection d'air d'évacuation des sables ou des boues, etc...

Le fonctionnement du dispositif ainsi décrit est le suivant:

### 1° - Phase de remplissage :

Avant l'épisode pluvieux, le dispositif est vide.

L'eau remplit d'abord la fosse à sable 18 puis la partie basse du décanteur par l'intermédiaire de l'ouverture dégagée par le clapet 24 qui occupe la position illustrée par la figure 2.

Le remplissage du dessableur et du décanteur s'effectue donc simultanément et sans chute ni turbulence d'eaux brutes au travers de cette ouverture. La décantation est donc possible durant cette phase de démarrage.

Avant d'être évacuée par la conduite d'évacuation 32, l'eau clarifiée remplit les enceintes de stockage 34. Un détecteur de niveau signale que le dispositif est plein et en phase de production.

### 2° - Phase de production :

L'eau brute dépose le sable et les particules les plus grosses dans la fosse à sable 18. Le clapet 24 reste fermé en l'absence d'une charge hydraulique suffisante pour provoquer son ouverture. L'eau se débarasse de ses élements flottables dans la zone de dégraissage mentionnée à la partie supérieure de la figure 2.

La zone d'alimentation du décanteur est large et elle permet donc de réaliser une décantation des particules les plus lourdes.

L'eau traverse le décanteur lamellaire 37 qui retient les particules les plus fines qui glissent en s'agglomérant sur les différents compartiments du radier 20 où elles s'accumulent.

Pendant cette phase de production, les particules s'accumulent également dans la fosse à boue 22 du décanteur. Compte-tenu de la faible durée de l'épisode pluvieux, la hauteur de boue ainsi accumulée reste faible.

### 3°- Phase de vidange :

La fin de l'épisode pluvieux est signalée par un détecteur de niveau temporisé. La pompe 28 est alors mise en action après un temps nécessaire à une clarification complète de l'eau stockée dans le décanteur. Cette pompe évacue alors la tranche d'eau claire située dans le décanteur et dans la partie supérieure du dessableur, par l'intermédiaire du clapet 24 qui est en position ouverte, vers la conduite 32 d'évacuation d'eaux clarifiées.

Cette pompe s'arrête au niveau prévu, mentionné ci-dessus, c'est-à-dire légèrement au-dessus du niveau supérieur du radier 20, de façon à ne pas évacuer les flottants ou les boues de fond. Au même moment, la seconde pompe 30 démarre de manière à extraire ces boues et ces flottants.

On notera que le radier 20 présente une pente suffisante pour que la grande partie des boues puisse glisser au fur et à mesure de la descente du plan d'eau. Un détecteur du point le plus bas du niveau d'eau assure le déclenchement de l'arrêt de la pompe 30.

### 4°-Phase de nettoyage du radier.

On a vu qu'à chaque portion de radier délimité par les cloisons telles que 36 correspond une enceinte de stockage telle que 34 comportant une vanne avec diffuseur 38.

Les radiers sont nettoyés les uns après les autres par ouverture de cette vanne 38 et vidange partielle de l'enceinte de stockage 34 correspondante. La quantité d'eau utilisée à chaque nettoyage est inférieure au volume de la fosse à boue 22 afin d'assurer le nettoyage de la totalité du radier. Cette eau est évacuée par l'intermédiaire de la pompe 30 avant le passage au nettoyage de la portion de radier suivante.

Le détecteur du niveau le plus bas dans le décanteur arrête le fonctionnement de la pompe 30 et autorise le lavage de la portion de radier suivante.

Suivant les cas, chaque portion de radier peut être nettoyé de une à trois fois par exemple.

### 5°-Evacuation du sable

Le sable peut être évacué à la suite de l'opération de nettoyage si le dispositif comporte un ouvrage spécifique de réception tel que fosse, benne, etc. L'extraction peut être différée si l'opération est réalisée par un camion vidange par exemple.

L'opération d'évacuation du sable s'effectue de la manière suivante :
Détassage du sable par injection d'air comme décrit ci-dessus ;
Ouverture de la vanne du tube siphon 44 ;
Transfert du sable par siphonage dans la fosse à boue 22 et,
Pompage du sable par l'intermédiaire de la pompe 30 vers l'ouvrage de réception (fosse, benne, camion vidange, etc...), après ouverture de la vanne 42.

### 6°-Dispositif à l'arrêt

Le dispositif est vide et nettoyé, les différentes vannes sont en position de fermeture et les pompes sont arrêtées.

## Revendications

1. Dispositif destiné à assurer le traitement des eaux résiduaires, en réalisant à la fois le dessablage, le dégraissage et la décantation, qui comporte, un dessableur (10), muni d'une fosse à sable et d'une cloison 11 permettant au dessableur d'être traversé par un flux descendant puis ascendant de l'eau à traiter, un décanteur (14) comportant une cuve d'alimentation ou de prédécantation (16), un radier (20), une zone de décantation lamellaire (37), et une fosse d'extraction (22), et une zone de dégraissage (12) prévue au-dessus d'une partie du dessableur (10) et de la zone d'alimentation (16) du décanteur (14), ce dispositif étant caractérisé en ce que la cloison (26) séparant le dessableur (10) du décanteur (14) comporte un clapet (24), permettant le transfert de l'eau brute vers le décanteur, et donc la décantation, durant la phase de remplissage dudit décanteur, et également une évacuation de la tranche d'eau exempte de sable et clarifiée, située dans le décanteur et dans la partie supérieure du dessableur, lors de la phase de vidange du décanteur.

2. Dispositif selon la revendication 1 caractérisé en ce que l'on prévoit, dans le décanteur (14), un double système d'extraction (28, 30) pour assurer une évacuation séparée de la tranche d'eau clarifiée d'une part et, des boues et des flottants d'autre part.

3. Dispositif selon la revendication 2 caractérisé en ce que ce double système d'extraction (28, 30) comporte :
- des moyens (28) prévus légèrement au-dessus du point haut du radier (20) du décanteur, pour évacuer l'eau clarifiée sans évacuer la boue et les flottants, ces moyens pouvant être réalisés sous la forme d'une pompe (28) et,
- des moyens (30) pour évacuer les boues puis les flottants dans le décanteur, ces moyens positionnés au fond du décanteur et réalisés notamment sous la forme d'une pompe apte à être mise en action après l'évacuation de la tranche d'eau clarifiée supérieure par lesdits premiers moyens (28).

4. Dispositif selon l'une quelconque des revendications précédentes caractérisé en ce que l'on prévoit des enceintes de stockage d'eau clarifiée (34) destinées à assurer le nettoyage du radier (20) du décanteur.

5. Dispositif selon l'une quelconque des revendications précédentes caractérisé en ce que le dispositif comprend également un système d'évacuation des sables (44), à la partie inférieure de l'enceinte du dessableur (10), ce système utilisant les moyens (30) prévus pour l'évacuation des boues.

6. Dispositif selon la revendication 5 caractérisé en ce que le refoulement de la pompe de transfert (30) assurant l'évacuation des boues est pourvu de deux vannes (40, 42) : l'une permettant l'évacuation vers l'égout lors de la vidange du décanteur, l'autre assurant le transfert vers une fosse ou similaire.

7. Dispositif selon l'une quelconque des revendications précédentes caractérisé en ce que le radier (20) du décanteur est compartimenté à l'aide d'un certain nombre de cloisons (36) délimitant ainsi des portions de radier à chacune desquelles est affectée une enceinte de stockage d'eau (34) ainsi qu'une vanne avec diffuseur (38) permettant d'assurer par circulation d'eau, le nettoyage de cette portion de radier à partir de l'eau contenue dans ladite enceinte.

8. Dispositif selon l'une quelconque des revendications précédentes caractérisé en ce que ledit clapet (24) est un clapet lesté restant fermé en l'absence de charge hydraulique en amont de la cloison (26) sur laquelle il est monté.

9. Application du dispositif selon l'une quelconque des revendications précédentes au traitement des eaux de pluie.

## Claims

1. Device intended for ensuring the treatment of waste water, by carrying out simultaneously sand removal, grease removal and settling, which device comprises a sand separator (10) equipped with a sand pit and with a partition (11) enabling the sand separator to be traversed by a descending and then an ascending flow of the water to be treated, a settling tank (14) comprising a feed or presettling zone (16), a floor (20), a lamellar settling zone (37) and an extraction pit (22) and a grease-removal zone (12) provided above a portion of the sand separator (1') and of the feed zone (16) of the settling tank (14), this device being characterized in that the partition (26) separating the sand separator (10) from the settling tank (14) comprises a valve (24), allowing the transfer of the raw water to the settling tank, and thus the settlement during the filling stage of said settling tank, and also a removal of the layer of water freed of sand and clarified, situated in the settling tank and in the upper part of the sand separator, during the phase of emptying the settling tank.

2. Device according to claim 1, characterized in that there is provided, in the settling tank (14), a double extraction system (28, 30) for ensuring a separate removal of the layer of clarified water, on the one hand, and of the sludge and floating solids on the other hand.

3. Device according to claim 2, characterized in that this double extraction system (28, 30) comprises:
- means (28) provided slightly higher than the high point of the floor (20) of the settling tank, for removal of the clarified water without removing the sludge and floating solids, these means being optionally constructed in the form of a pump (28) and,
- means (30) for removing the sludge and then the floating solids from the settling tank, these means being positioned at the bottom of the settling tank and constructed, notably, in the form of a pump adapted to be brought into action after removal of the upper layer of clarified water by said first means (28).

4. Device according to any one of the preceding claims, characterized in that storage enclosures are provided for clarified water (34) intended for use in cleaning the floor (20) of the settling tank.

5. Device according to any one of the preceding claims, characterized in that the device comprises also a system for removing the sand (44) at the lower part of the enclosure of the sand separator (10), this system using the means (30) provided for the removal of the sludge.

6. Device according to claim 5, characterized in that the delivery of the transfer pump (30) assuring removal of the sludge is provided with two valves (40, 42): the one permitting the discharge to the drain during the emptying of the settling tank, the other permitting transfer to a pit or the like.

7. Device according to any one of the preceding claims, characterized in that the floor (20) of the settling tank is compartmented by a certain number of partitions (36), thus defining portions of the floor, with each of which there is associated a water storage enclosure (34) and a valve with diffuser (38), making possible by a flow of water the cleaning of this portion of the floor from the water contained in said enclosure.

8. Device according to any one of the preceding claims, characterized in that said valve (24) is a weighted valve which remains closed in the absence of a hydraulic head upstream of the partition (26) on which it is mounted.

9. Application of the device according to any one of the preceding claims to the treatment of rain water.

## Patentansprüche

1. Vorrichtung zur Behandlung von Abwässern, die zugleich das Entsanden, das Entfetten und das Dekantieren sicherstellt und einen Entsander (10), der mit einem Sandgraben und einer Wand (11) versehenen ist, die es ermöglicht, daß ein absteigender und sodann ein aufsteigender Abwasserfluß den Entsander durchquert, einen Dekantierer (14), der ein Becken zur Versorgung oder zur Prädekantierung (16), ein Fundamentbett (20), einen Bereich der lamellaren Dekantierung (37) und einen Abzugsgraben (22) aufweist, und einen Entfettungsbereich (12) aufweist, der über einem Teil des Entsanders (10) und dem Versorgungsbereich (16) des Dekantierers (14) vorgesehen ist,
dadurch **gekennzeichnet**,
daß die den Entsander (10) vom Dekantierer (14) trennende Wand (26) eine Klappe (24) aufweist, die während der Füllphase des Dekantierers eine Überleitung des unbehandelten Wassers zum Dekantierer und somit die Dekantierung sicherstellt und ebenso während der Leerungsphase des Dekantierers die Evakuierung der von Sand befreiten und geklärten Wasserschicht sicherstellt, die im Dekantierer und im oberen Bereich des Entsanders vorhanden ist.

2. Vorrichtung nach Anspruch 1,
dadurch **gekennzeichnet**,
daß im Dekantierer (14) ein doppeltes Abzugssystem (28,30) zur getrennten Evakuierung der geklärten Wasserschicht einerseits und der Schlämme und Schwebeteilchen andererseits vorgesehen ist.

3. Vorrichtung nach Anspruch 2,
dadurch **gekennzeichnet**,
daß dieses doppelte Anzugssystem aufweist:
- etwas über dem höchsten Punkt des Fundamentbettes (20) des Dekantierers vorgesehene Mittel (28) zur Evakuierung des geklärten Wassers, ohne dabei den Schlamm und die Schwebeteilchen abzuführen, wobei diese Mittel in Form einer Pumpe (28) vorliegen können und
- Mittel (30) zur Evakuierung der Schlämme, dann der Schwebeteilchen im Dekantierer, wobei diese Mittel am Grund des Dekantierers angeordnet und insbesondere in Form einer Pumpe gestaltet sind, die nach der Evakuierung der oberen geklärten Wasserschicht durch die ersten Mittel (28) in Betrieb setzbar ist.

4. Vorrichtung nach einem der vorhergehenden Ansprüche,
dadurch **gekennzeichnet**,
daß Behälter zur Speicherung des geklärten Wassers (34) vorgesehen sind, das zur Reinigung des Fundamentbettes (20) des Dekantierers bestimmt ist.

5. Vorrichtung nach einem der vorhergehenden Ansprüche,
dadurch **gekennzeichnet**,
daß die Vorrichtung im unteren Bereich des Behälters des Entsanders (10) auch ein System zur Evakuierung von Sänden (44) aufweist, das die für die Evakuierung von Schlämmen vorgesehene Mittel (30) einsetzt.

6. Vorrichtung nach Anspruch 5,
dadurch **gekennzeichnet**,
daß der Ablauf der Überleitungspumpe (30) zur Evakuierung der Schlämme mit zwei Ventilen (40,42) versehen ist: Das eine gestattet die Evakuierung zum Abfluß während der Leerung des Dekantierers, das andere stellt die Überleitung zu einem Graben oder ähnlichem sicher.

7. Vorrichtung nach einem der vorhergehenden Ansprüche,
dadurch **gekennzeichnet**,
daß das Fundamentbett (20) des Dekantierers mit Hilfe einer gewissen Anzahl von Trennwänden (36) unterteilt ist, die so Bereiche des Fundamentbetts begrenzen, von denen jeweils einer einem Wasserspeicherbehälter (34) wie auch einem Ventil mit Diffusor (38) zugeordnet ist, wodurch durch den Umlauf des Wassers die Reinigung dieses Bereiches des Fundamentbettes ausgehend von dem in diesem Behälter enthaltenden Wasser sichergestellt ist.

8. Vorrichtung nach einem der vorhergehenden Ansprüche,
dadurch **gekennzeichnet**,
daß die Klappe (24) eine Belastungsklappe ist, die in Abwesenheit einer hydraulischen Belastung stromaufwärts der Trennwand (26), auf die sie montiert ist, geschlossen bleibt.

9. Verwendung der Vorrichtung nach einem der vorhergehenden Ansprüche zur Behandlung von Regenwasser.
